# EUROPÄISCHE PATENTSCHRIFT

(11) **EP 0 659 813 B1**
(45) Veröffentlichungstag und Bekanntmachung des Hinweises auf die Patenterteilung: **12.08.1998**
(21) Anmeldenummer: 94118292.5
(22) Anmeldetag: 21.11.1994
(51) Int. Cl.: C08J 11/24, C08J 11/06, C09D 9/00

(54) **Chemisch-mechanisches Entlacken von Kunststoffteilen**
Chemical-mechanical stripping of paint from plastic components
Décapage chimique-mécanique de peinture des pièces en matière plastique

(30) Priorität: 24.12.1993 DE 4344582
(43) Veröffentlichungstag der Anmeldung: 28.06.1995
(73) Patentinhaber: DAIMLER-BENZ AKTIENGESELLSCHAFT, 70567 Stuttgart (DE)
(72) Erfinder: Löhr, Karsten, Dr. Dipl.-Phys., D-89073 Ulm (DE); Kettemann, Bernd-Uwe, Dipl.-Ing., D-89275 Elchingen (DE); Zürn, Jörg, Dr.-Ing., D-89075 Ulm (DE); Melchiorre, Michele, Dipl.-Ing., D-89134 Blaustein (DE)

(56) Entgegenhaltungen:
- EP-A- 0 050 486
- GB-A- 134 967
- GB-A- 1 445 168

## Beschreibung

Die Erfindung betrifft ein Verfahren zum chemischen Entschichten von Kunststoffteilen gemäß dem Oberbegriff des Hauptanspruchs, wie es beispielsweise aus der GB-PS 1 134 967 als bekannt hervorgeht.

In den letzten Jahren nahm die Verwendung von Kunststoffen in der Automobilindustrie ständig zu. Um die Kunststoffe, z.B. Polycarbonate, noch besser ihrer Verwendung im Kfz-Bereich anzupassen, werden ihre Oberflächen lackiert. Stoßfänger und andere Kunststoffteile, die einen in der Karosserie integrierten Bestandteil bilden, werden durch Lackierungen z.B. gegen Umwelteinflüsse geschützt und optisch in die Farbgebung des Kraftfahrzeuges integriert. Beim Recycling der genannten Stoffe ergeben sich ganz spezifische Probleme. Der Farbbelag von Zweikomponenten-Lacken zerfällt beim Wiederverwerten der Kunststoffe mechanisch in kleine flitterartige Farbpartikel, die zu einer Schädigung des wiedergewonnenen Rohstoffs führen, so daß dieser nur noch zu minderwertigen Produkten verarbeitet werden kann. Die zurückbleibenden Farbflitter bewirken beispielsweise eine mechanische Schwächung der aus recycliertem Material erzeugten Produkte, weil sie einen geschlossenen Werkstoffverbund immer wieder unterbrechen und Ausgangsstellen für Anrisse, also Mikrokerben darstellen. Gegenstände aus zuvor nicht-entlackten Rezyklat-Kunststoff haben eine nur sehr geringe Zugfestigkeit und Kerbschlag-Zähigkeit sowie eine ebenfalls sehr geringe Reiß- und Bruchdehnung im vergleich zum gleichen Original-Kunststoff. Aus diesem Grunde und weil das Entlacken andererseits ein vergleichsweise teurer Prozeß ist, hat man auf das Entlacken von Altkunststoffen meist verzichtet und derartige Altteile anderweitig entsorgt.

Dabei hat es nicht an Bemühungen gefehlt, unterschiedliche Verfahren zum Entlacken von Kunststoffen zu entwickeln:

Bei Partikel-Strahlverfahren ist der Verbrauch an Strahlmittel für die Entlackung eine Begleiterscheinung, welche einerseits den Materialverbrauch für die Aufbereitung in ungünstigen Maße ansteigen läßt und andererseits durch das Einarbeiten oder Eindiffundieren von Strahlmittel-Bruchstücken in den Basiswerkstoff zu einer Schädigung des Rezyklats führt. Außerdem läßt sich kein gleichmäßiger oder vollständiger Lackabtrag erzielen. Ferner sind diese Verfahren in den Fällen, in denen jedes Werkstück als ganzes behandelt wird, einzeln und örtlich gezielt und somit manuell durchzuführen, so daß diese Verfahren nicht mit vertretbarem Kostenaufwand in der Altkunststoff-Entlackung einsetzbar sind.

Wasser-Strahlverfahren sind für Kunststoffteile wegen deren geringer Dichte und Schwere nicht geeignet, weil die Kunststoffteile vor dem Strahldruck ausweichen. Zudem ist der Strahlwinkel hierbei eine wichtige Einflußgröße und kann bei stark gewölbten oder strukturierten Oberflächen nicht immer eingehalten werden.

Beim sogenannten Schmelzefilterverfahren, bei welchem die nichtplastifizierbaren Bestandteile, wie z.B. die Lackpartikel aus der plastifizierten Kunststoffschmelze beim Extrusionsvorgang abgefiltert werden, ist die benötigte Feinheit des Filters zur ausreichenden Entfernung der feinen Lackflitter und der dazu erforderliche große Filterflächenbedarf sowie der dabei entstehende hohe Verbrauch an Filterfläche von Nachteil. Nach Untersuchungen der Anmelderin erzeugen die hohe, für eine gute Fließfähigkeit durch den Filter benötigte Extrusionstemperatur sowie der starke Differenzdruck eine degradative Schädigung der polymeren Kunststoffmatrix. Bei einem erweiterten, d.h. kombiniert abrasiven und die Kunststoffschmelze filtrierenden Verfahren wird ein Großteil des Lackes zunächst durch eine Kegelpresse und eine Stiftenmühle entfernt, um den Restlack-Bestand vor dem Filtern sowie den Filterflächenbedarf bei der anschließenden Schmelzefiltration und den Filterverbrauch dabei zu vermindern. Bedenklich ist hierbei ebenfalls die Schädigung des Kunststoffes, sowohl durch die starken abrasiven Vorgänge, als auch durch die Schmelzefiltration.

Bei einem von einem Fahrzeughersteller empfohlenen Verfahren zum Entfernen des Lackes von kompletten Stoßfänger-Verkleidungen werden diese in einem Ofen erweicht und flachgepreßt und anschließend wird der Lack durch Bürsten abrasiv entfernt. Bei diesem Verfahren zur Behandlung von ganzen Kunststoffteilen ist von Nachteil, daß unzerkleinerte, also sperrige Kunststoffteile gesammelt und zentral behandelt werden müssen. Derartig sperrige Teile sind von sehr geringer Transportdichte, wodurch die Transportkosten und das zu transportierende Bruttogewicht im Vergleich zum ökologischen Nutzen ungünstig beeinflußt werden.

Ein zwar denkbares chemisches Entlacken mit halogenierten Kohlenwasserstoffen (FCKW, CKW) ist wegen der umweltrelevanten Schädigungen dieser Substanzen gesetzlich verboten.

Eine chemische Entlackung von Kunststoffteilen wird von einem anderen Fahrzeughersteller angegeben. Dabei wird eine organische Sulfid-Lösung bei 80°C bis 100°C eingesetzt. Diese Lösung ist nicht umweltverträglich. Wegen ätherischer und alkoholischer Bestandteile besteht außerdem die Gefahr der Selbstentzündung bzw. Explosion, weshalb auch die Möglichkeit einer gleichzeitig ablaufenden mechanischen Behandlung entfallen dürfte.

Die englische Patentschrift 1,134,967 beschreibt ein Verfahren zur Zurückgewinnung von Filmabfällen der Foto- und Filmindustrie, die aus offenbar teurem Polyester, nämlich vorzugsweise Poly-1,4-cyclohexandimethylen-Terephthalat besteht, so daß sich eine Rückgewinnung lohnt. Die lichtempfindliche Schicht kann beispielsweise in heißem Wasser aufgeweicht und abgetragen werden.

Allerdings muß vor einer Rückgewinnung des Basismaterials des Filmes auch eine etwa 25 µm dünne Haftvermittlerschicht entfernt werden. Und zwar besteht die Haftvermittlerschicht aus einem copolymeren Vinyliden-Halid, vorzugsweise einem copolymeren Vinyliden-Chlorid, das
▷ 30 bis 98 Gew.-%, vorzugsweise mindestens 35 Gew.-% Vinyliden-Halide,
▷ 0,5 bis 40 Gew.-%, vorzugsweise 10 bis 15 Gew.-% Acrylonitrile und/oder - vorzugsweise zusätzlich 1 bis 12 Gew.-% - Alkylester einer acrylischen, einer methacrylischen oder einer itaconischen Säure und
▷ 1 bis 25 Gew.-% acrylische, methacrylische oder itaconische Säure
enthält. Um diese Haftvermittlerschicht zu entfernen, wird das zu Schnitzeln von etwa 1 cm Seitenlänge zerkleinerte Filmmaterial mit einer gewichtsmäßig mindestens sechsfachen, vorzugsweise 10- bis 50-fachen Menge von mit Natronlauge oder Kalilauge alkalisiertem Glykol bei mindestens 90 °C, vorzugsweise 145 bis 155°C in Kontakt gebracht, also in dem alkalisierten Glykol suspendiert und diese Suspension so lange, vorzugsweise etwa 2 Minuten lang, umgerührt oder umgewälzt, bis zumindest der Überwiegende Teil der Schnitzel entschichtet ist. Anschließend werden die entschichteten Schnitzel und das Glykol voneinander getrennt. Als zu verwendendes Glykol wird vorzugsweise Ethylenglykol und speziell 1,4-Cyclohexandimethanol vorgeschlagen, d.h. dasjenige Glykol, welches in seiner chemischen Struktur dem speziellen Polyester des zu entschichtenden Basismaterials entspricht. Durch das für das chemische Entschichten empfohlene, mit dem Basiswerkstoff chemisch verwandte Glykol wird der Basiswerkstoff zumindest bei erhöhter Temperatur an- oder auflöst und so die Bindung zu der zu entfernenden Schicht gestört oder gelöst, wobei die zu entfernende Schicht abblättert. Es wird dabei ein teilweises An- oder Auflösen des Basiswerkstoffes nicht nur in Kauf genommen, sondern sogar bewußt angestrebt. Und zwar wird als Obergrenze der Behandlungstemperatur eine solche Temperatur empfohlen, bei der etwa 5 Gew.-% des Basiswerkstoffes gelöst werden können, in jedem Fall aber weniger als etwa 200 °C. Das vorgeschlagene Entschichtungsverfahren stammt aus einer Zeit (1966), als ökologische Gesichtpunkte für die Verfahrensgestaltung noch keine ausschlaggebende Rolle spielten, sondern Kostengesichtspunkte Vorrang hatten. Der Einsatz von Ethylenglykol in so großen Mengen ist nämlich unter ökologischen Gesichtpunkten höchst bedenklich, weil dieses Glykol in der Schädlichkeits-Skala als "minder-giftig" einzustufen ist.

Die Aufgabe der Erfindung besteht darin, ein Verfahren anzugeben, welches einen vollständigen Abtrag einer Lackierung von Kunststoffteilen bei minimaler Schädigung des Kunststoffmaterials unter Einsatz umweltverträglicher Mittel sowie bei geringem Material- und Energieverbrauch erreicht und - zumindest bei schüttfähigen oder schüttfähig vorzerkleinerten Kunststoffteilen - in einem automatisierbarem Prozeß durchgeführt werden kann.

Ausgehend von dem gattungsgemäß zugrundegelegten Verfahren wird die Aufgabe erfindungsgemäß dadurch gelöst, daß zum Entlacken von lackierten Kunststoffteilen diese gemeinsam mit einem wasserfreien alkalisierten Diethylenglykol oder Propylenglykol - nachfolgend zusammenfassend "Entlackungsmittel" genannt - in einer Schüttung unter gegenseitigem Scheuern der Kunststoffteile bei mindestens 50 °C umgewälzt werden, wobei die Menge des zugegebenen Entlackungsmittels 1 bis 10 Vol.-% des Schüttvolumens der zu behandelnden Schüttung entspricht, derart, daß die umgewälzten Teile vom Entlackungsmittel lediglich benetzt werden.

Danach wird die chemisch-lösende Einflußnahme auf den Altlack durch ein umweltverträgliches Zwei-Komponenten-Gemisch an Diäthylenglykol und/oder Propylenglykol einerseits und Kaliumhydroxid und/oder Natriumhydroxid andererseits erreicht. Diäthylenglykol besitzt die Wassergefährdungsklasse Null. Kaliumhydroxid kann nach Neutralisierung als Diätsalzlösung unbedenklich in die Abwasserbehandlung eingeleitet werden. Bei der Entlackung findet eine Verseifung des Polycarbonats statt, welches als Reaktion keine bedenklich einzustufenden Folgeprodukte freisetzt. Die mechanisch-abrasive Einflußnahme ist so ausgelegt, daß keine Schädigung des Kunststoffmaterials entsteht, gleichzeitig aber der Lack an allen Seiten des Partikels unabhängig von der spezifischen Partikelform abgetragen wird. Die Behandlung in dem Reaktor erfolgt automatisch und gestattet die Entlackung verschiedener Partikelformen nach entsprechender Vorzerkleinerung. Der Reaktor ist während der Behandlung geschlossen, um Heizenergie zu sparen und den Verdampfungsverlust der Chemikalien zu minimieren.

Die **Vorteile** der erfindungsgemäßen Ausgestaltung des Entlakkungsverfahrens liegen in Folgendem:
▷ Vollständiger Lackabtrag von den Kunststoffteilen ist erreichbar,
▷ minimale Schädigung der Kunststoffteile,
▷ minimaler Verbrauch an Energie und Prozeßhilfsstoffen,
▷ niedrige Prozeßkosten im Vergleich zum Neuwert des rezyklierten Materials,
▷ nur Einsatz von Umwelt-unbedenklichen Mitteln,
▷ keine ökologisch bedenklichen Emissionen oder Reststoffe,
▷ der Prozeß ist automatisierbar und kontinuierlich betreibbar.

Die Anwendung des beschriebenen Verfahrens ergibt sich für alle Fälle, bei denen ein Polycarbonat oder Polycarbonat-Blend durch Entlackung einer stofflich hochwertigen Verwertung zugeführt werden kann. Im Besonderen ist dies für die Stoßfänger der oberen Automobilklasse gegeben, welche zu über 50 % und mehr als 4 kg pro Teil aus diesem Material besteht.

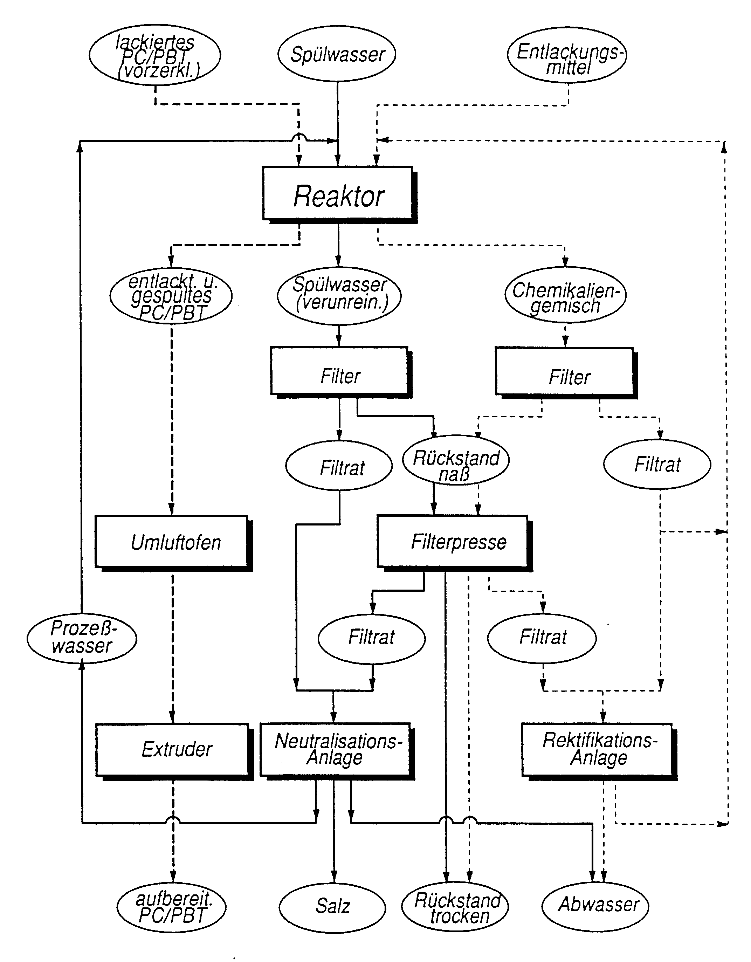

Nachfolgend soll anhand eines in der Zeichnung dargestellten Flußdiagrammes über einen Probebetrieb einer Entlackung von Stoßfängern bei der Anmelderin in halbtechnischem Maßstab berichtet werden:

Die vorderen und hinteren Stoßfänger an Kraftfahrzeugen bestehen aus einer Vielzahl von Einzelbauteilen aus verschiedenen Materialien. Von allen Niederlassungen und Vertragspartnern der Anmelderin werden die alten, von reparierten Unfallfahrzeugen stammenden Stoßfänger durch eine Entsorgungsfirma abgeholt, zentral gesammelt und in die diversen Einzelteile zerlegt und nach Werkstoffen sortiert. Das größte Bauteil an den Stoßfängern aus dem Hause der Anmelderin ist die Verkleidung; diese besteht bei den meist Fahrzeug-Typen aus einem Kunststoffblend aus Polycarbonat und Polybutylenterephtalat (PC/PBT bzw. PBT/PC), die in dem nachfolgend beschriebenen Verfahrens-Beispiel entlackt werden sollen. Allerdings sei gleich darauf hingewiesen, daß das beschriebene Entlackungsverfahren auch für andere lackierte Kunststoffe, wie z.B. EUPP, geeignet ist.

Ziel der Aufbereitung lackierter Grundkörper auf hohem Niveau ist, den Lack vollständig abzulösen. Dazu werden die Stoßfänger zunächst auf schüttfähige Teilegröße vorzerkleinert, wobei hier ein solches Teilespecktrum zweckmäßig ist, daß die größte Kanten- oder Über-Alles-Länge der Teile bei etwa 90 Gew.-% der Teile kleiner als 20 cm und bei mindestens 99 Gew.-% der Teile größer als 1 mm mißt. Anstelle einer Größenklassierung kann auch eine Gewichtsklassierung der vorzerkleinerten Teile angegeben werden: Anzustreben wäre danach ein Teilespektrum, bei dem bei etwa 90 Gew.-% der Teile diese jeweils weniger als 50 g und bei mindestens 99,5 % der Teile diese jeweils mehr als 5 mg wiegen. Die ungefähre Grenze für die obere Teilegröße markiert etwa denjenigen Bereich, unterhalb dem ein annähernd homogenes und geordnetes Schütten und Umwälzen der Teile noch möglich ist. Ein Unterschreiten der Untergrenze wäre unzweckmäßig, weil nur bis dahin eine degradative Schädigung der Teile bzw. des Kunststoffes noch erträglich bleibt. Die Verkleidung von gebrauchten und zerlegten Stoßfängern wurde durch mehrfaches Passieren eines Doppelwellenschneiders auf thermisch und mechanisch schonende Weise zu gleichmäßigen Schnipseln von etwa 25 mm Kantenlänge mit einem engen Teilespektrum zerkleinert. Diese Teile konnten im Reaktor ohne weiteres behandelt werden.

Die dabei erhaltenen PC/PBT- bzw. PBT/PC-Stückchen wurden in Batches von je 50 kg in einen Reaktor gegeben. Je nach Größe der Anlage können je Charge oder Batch etwa 10 bis 1000 kg an Kunststoffteilen oder 25 bis 2500 1 an Schüttvolumen behandelt werden. Bei der installierten Anlage konnte eine Gleitschleifanlage der Firma Spaleck verwendet werden, die normalerweise bei der Teilefertigung von Massenteilen zum Entgraten, Putzen, Polieren oder ähnlichen Oberflächenbehandlungen eingesetzt wird. Dabei wurde die Innenauskleidung auf Chemikalien- und Hitzebeständigkeit modifiziert. Ferner wurde die Gleitschleifanlage entsprechend der Anforderungen für den Reaktor mit einer Umpumpeinrichtung, einer Heizvorrichtung und mit einem Verschlußdeckel für die Einfüllöffnung ergänzt. Durch die bodenseitigen Rührflügel der verwendeten Gleitschleifanlage wird der Behälterinhalt in eine rotationssymmetrische Umwälzbewegung mit einer zentrischen Trombe versetzt. Bei der verwendeten Gleitschleifanlage handelt es sich somit um einen verschließbaren Zwangsmischer. Dem Partikelschüttwerk kann auf diese Weise eine einfach dosierbare Menge an mechanischer Energie zugeführt werden. Mittels der am verschließbaren Reaktorgefäß vorgesehenen Umpumpeinrichtung für das Entlackungsmittel und mittels der in dem Entlackungsmittel-Kreislauf angeordneten Heizvorrichtung kann das Entlackungsmittel aus einem Vorrat kontinuierlich durch den Behandlungsraum der Schüttung hindurchgefördert und in einem Kreislauf zirkuliert werden. Der im Kreislauf vorhandene, zirkulierte Vorrat an Entlackungsmittel entspricht volumenmäßig etwa dem 0,3 bis 5-fachen, vorzugsweise dem 0,7 bis 2-fachen der im Behandlungsraum befindlichen Schüttung. Im Reaktor selber darf nur eine so große Menge an Chemikaliengemisch vorhanden sein, daß die umgewälzten Teile der zu behandelnden Schüttung von den Chemikalien lediglich benetzt sind, jedoch keinesfalls von ihnen suspendiert werden.

Die für das Entlacken erforderliche Prozeßwärme der umgewälzten Schüttung kann zumindest teilweise mittelbar über das zirkulierte Entlackungsmittel zugeführt werden, und zwar außerhalb des Behandlungsraumes im Kreislaufsystem, indem das Entlackungsmittel mit der im Kreislauf angeordneten Heizvorrichtung erwärmt wird.

Der Vollständigkeit halber sei erwähnt, daß auch andere Mischertypen als oben genannt grundsätzlich für das vorliegende Verfahren geeignet sind, z.B. können die Partikel in Freifallmischern umgewälzt werden oder auch in Drehrohrmischern.

Zwar ist es - abgesehen von der nötigen Chemikalienzugabe und der Temperaturanhebung - denkbar, lediglich die vorzerkleinerten Kunststoffteile alleine in dem Reaktor zu behandeln. Es hat sich jedoch als Zweckmäßig erwiesen, der Teileschüttung Scheuerpartikel beizugeben, die aus einem gegenüber Lauge und Glykol beständigen Werkstoff, insbesondere aus rostfreiem Stahlblech hergestellt sind. Allerdings dürfen diese Scheuerpartikel im Vergleich zur Kunststoffteile-Schüttung nicht zu leicht und nicht zu schwer sein, damit sie sich nicht beim Umwälzen entmischen. Empfehlenswert erscheint es, wenn die mit umgewälzten Scheuerpartikel ein spezifisches Schüttgewicht aufweisen, welches dem 0,2- bis 5-fachen, vorzugsweise dem 0,5- bis 2-fachen des spezifischen Schüttgewichtes der Kunststoffteile entspricht. Hier sind handelsübliche Füllkörper für Rieseltürme o.dgl. geeignet. Was die Zugabemenge anlangt, so empfielt es sich, so viele Scheuerpartikel der umzuwälzenden Schüttung zugegeben werden, daß - bezogen auf das gesamte Schüttvolumen - der Anteil der Scheuerpartikel etwa 1 bis 20 Vol.-%, vorzugsweise 5 bis 10 Vol.-% davon ausmacht.

Unter Zugabe von thermischer und mechanischer Energie werden die Kunststoffteile mit einem flüssigen Chemikaliengemisch in einem diskontinuierlich arbeitenden Behandlungsgefäß chargen- oder batchweise umgewälzt. Die Chargen oder Batches werden so jeweils 5 bis 30 Minuten, vorzugsweise 10 bis 20 Minuten lang behandelt. Bei der bei der Anmelderin installierten Anlage wurden die Partikel etwa 15 Minuten lang behandelt.

Die Menge des im Reaktor befindlichen Chemikaliengemisches entspricht 1 bis 10 Vol.-% des Schüttvolumens der zu behandelnden Schüttung, derart, daß die umgewälzten Teile lediglich davon benetzt sind. Das Chemikaliengemisch wird bei der Behandlung kontinuierlich mit einem Mengenstrom von etwa 5 bis 20 l/min durch den Reaktor hindurchgeleitet und umgepumpt, wobei ein Chemikalien-Vorrat von etwa 40 1 in diesem Umlaufsystem eingesetzt wird. Als Chemikaliengemisch wird alkalisiertes Diethylenglykol oder Propylenglykol verwendet. Der Lack ist nach dieser Zeit abgelöst und zum Teil in Form fester, schwebender Teilchen in den Chemikalien enthalten.

Die Chemikalien werden aus dem Reaktor abgelassen und die darin befindlichen Lackpartikel herausfiltriert oder zentrifugiert. Das Gemisch kann etwa zehnmal eingesetzt werden, bei jedem Durchgang ist jedoch ein Verlust zu erwarten, der über die Kunststoffteile verteilt im Reaktor zurückbleibt.

Nach zehnmaligem Gebrauch wird das Chemikaliengemisch einer Rektifikationsanlage zugeführt. Mit Hilfe dieser Anlage wird ein großer Teil der Chemikalien zurückgewonnen, der Rest wird in der vorhandenen werkseigenen Abwasseraufbereitung inertisiert. Die Produkte dieser Aufbereitung, Wasser und Salz, werden als nicht wassergefährdend eingestuft und können problemlos in die Kanalisation entlassen werden.

Um den im Reaktor zurückbleibenden Chemikalienrest von den Kunststoffteilen zu trennen, wird nach jedem Batch zentrifugiert und anschließend mit 50 l Prozeßwasser gespült. Lackpartikel, die noch nicht mit den Chemikalien aus dem Reaktor abgesondert wurden, werden nun vom Wasser mit ausgespült.

Die in Chemikalien und Wasser enthaltenen Lackpartikel werden ausfiltriert. In einer Filterpresse wird Restfeuchte aus den Rückständen der Filter ausgepreßt. Die Filtrate gelangen zurück in die Flüssigkeitskreisläufe, die "getrockneten" Rückstände, die pro Batch etwa 0,5 kg Lack, 1 kg Wasser und 0,05 bis 0,1 kg Chemikaliengemisch umfassen, müssen gesondert entsorgt werden.

Nach jedem Durchlauf wird das Prozeßwasser in einer Neutralisationsanlage von Chemikalien gereinigt. Dieses Vorgehen gestattet einen fünfmaligen Einsatz des Wassers, bevor es als Spülflüssigkeit unbrauchbar geworden ist. Es kann dann als unproblematisches Abwasser in die werkseigene Abwasseraufbereitungsanlage abgegeben werden.

Die entlackten und gespülten PC/PBT- bzw. PBT/PC-Teile werden zentrifugiert, aus dem Reaktor entlassen und - nach einer Trennung von den Scheuerpartikeln - zum Trocknen in einen Umluftofen gegeben. Anschließend werden die entlackten Kunststoffteile in einem Extruder nachstabilisiert, granuliert und zum Versand verpackt.

Für den Betrieb der Anlage zur Aufbereitung von PC/PBT sind Energie, Personal, Transporte, Hilfsstoffe, Instandhaltung und Entsorgung erforderlich. Während die Kosten für Personal und Instandhaltung von der Auslastung innerhalb eines bestimmten Rahmens unabhängig sind, gehen Energie-, Transport-, Hilfsstoff- und Entsorgungskosten in Abhängigkeit von der durchgesetzten Menge in die Kostenrechnung mit ein. Erfahrungen mit den in halbtechnischem Maßstab durchgeführten Versuche der Anmelderin erlauben jedoch den Schluß, daß die Rückgewinnungskosten einschließlich der unmittelbaren und mittelbaren Kosten der Entlackung etwa 20 bis 40 % der Beschaffungskosten des Neu-Kunststoffes ausmachen.

Die Materialuntersuchung des in der geschilderten Weise recyclierten Kunststoffes durch Schmelzindexprüfung ergab vergleichbare Werte zu den Originalkennwerten der Bauteile. Die guten Eigenschaften des entlackten und aufbereiteten PC/PBT erlauben einen erneuten Einsatz des Materials zumindest als Beimischung bei der Produktion neuer Stoßfänger. Aus dieser Einsatzmöglichkeit kann auf die hohe Qualität des Rezyklats geschlossen werde, da von der Anmelderin höchste Qualitätsansprüche für Stoßfänger verlangt werden. Ein Anteil von etwa 10% Rezyklat am Material wird nach vorsichtiger Einschätzung von Experten die Qualität der Bauteile keinesfalls beeinträchtigen; wesentlich höher liegende und anzustrebende Rezyklat-Anteile erscheinen durchaus realistisch.

## Patentansprüche

1. Verfahren zum Entschichten von Alt-Teilen oder Ausschußteilen aus Kunststoff - im folgenden kurz Kunststoffteile genannt - zwecks Wiederverwertung des entschichteten Kunststoffes, bei dem die Kunststoffteile zunächst auf eine schüttfähige Teilegröße mechanisch zerkleinert werden, bei dem die Kunststoffschnitzel gemeinsam mit einem alkalisierten Glykol bei angehobener Temperatur umgewälzt werden und bei dem nach einer gewissen Behandlungszeit die entschichteten Kunststoffschnitzel vom Entschichtungsmittel getrennt, gespült und anschließend getrocknet werden,
**dadurch gekennzeichnet,**
daß zum Entlacken von lackierten Kunststoffteilen diese gemeinsam mit einem wasserfreien alkalisierten Diethylenglykol oder Propylenglykol - nachfolgend zusammenfassend "Entlackungsmittel" genannt - in einer Schüttung unter gegenseitigem Scheuern der Kunststoffteile bei mindestens 50 °C umgewälzt werden, wobei die Menge des zugegebenen Entlackungsmittels 1 bis 10 Vol.-% des Schüttvolumens der zu behandelnden Schüttung entspricht, derart, daß die umgewälzten Teile vom Entlackungsmittel lediglich benetzt werden.

2. Verfahren nach Anspruch 1,
**dadurch gekennzeichnet,**
daß das Umwälzen der Kunststoffteile bei 80 bis 100 °C erfolgt.

3. Verfahren nach Anspruch 1,
**dadurch gekennzeichnet,**
daß Kunststoffteile aus Polycarbonat (PC) oder aus einem Polycarbonat-Blend vorzugsweise mit Polybutylenteraphtalat (PBT/PC) entlackt werden.

4. Verfahren nach Anspruch 1,
**dadurch gekennzeichnet,**
daß das Entlackungsmittel aus einem Vorrat kontinuierlich durch den Behandlungsraum der Schüttung hindurchgefördert und in einem Kreislauf zirkuliert wird.

5. Verfahren nach Anspruch 4,
**dadurch gekennzeichnet,**
daß der im Kreislauf vorhandene, zirkulierte Vorrat an Entlakkungsmittel volumenmäßig dem 0,3 bis 5-fachen der im Behandlungsraum befindlichen Schüttung entspricht.

6. Verfahren nach Anspruch 5,
**dadurch gekennzeichnet,**
daß volumenmäßig das 0,7 bis 2-fache der im Behandlungsraum befindlichen Schüttung an Entlackungsmittel zirkuliert wird.

7. Verfahren nach Anspruch 4,
**dadurch gekennzeichnet,**
daß die für das Entlacken erforderliche Prozeßwärme der umgewälzten Schüttung zumindest teilweise mittelbar über das zirkulierte Entlackungsmittel zugeführt wird, wobei dieses außerhalb des Behandlungsraumes im Kreislaufsystem erwärmt wird.

8. Verfahren nach Anspruch 1,
**dadurch gekennzeichnet,**
daß die Kunststoffteile zunächst auf eine solche Größe mechanisch zerkleinert werden, daß die größte Kanten- oder Über-Alles-Länge der Teile bei etwa 90 Gew.-% der Teile kleiner als 20 cm und bei mindestens 99 Gew.-% der Teile größer als 1 mm mißt.

9. Verfahren nach Anspruch 1,
**dadurch gekennzeichnet,**
daß die Kunststoffteile zunächst auf eine solche Größe mechanisch zerkleinert werden, daß bei etwa 90 Gew.-% der Teile diese jeweils weniger als 50 g und bei mindestens 99,5 % der Teile diese jeweils mehr als 5 mg wiegen.

10. Verfahren nach Anspruch 1,
**dadurch gekennzeichnet,**
daß die Kunststoffteile in einen verschließbaren Freifall- oder Zwangsmischer oder in einen Drehrohrmischer umgewälzt werden.

11. Verfahren nach Anspruch 1,
**dadurch gekennzeichnet,**
daß die Kunststoffteile in Gegenwart von aus einem gegenüber Lauge und Glykol beständigen Werkstoff hergestellten Scheuerpartikeln umgewälzt werden.

12. Verfahren nach Anspruch 11,
**dadurch gekennzeichnet,**
daß die Kunststoffteile in Gegenwart von aus rostfreiem Stahlblech hergestellten Scheuerpartikeln umgewälzt werden.

13. Verfahren nach Anspruch 11,
**dadurch gekennzeichnet,**
daß die mit umgewälzten Scheuerpartikel ein spezifisches Schüttgewicht aufweisen, welches dem 0,2- bis 5-fachen des spezifischen Schüttgewichtes der Kunststoffteile entspricht.

14. Verfahren nach Anspruch 13,
**dadurch gekennzeichnet,**
daß die Scheuerpartikel in ihrem spezifischen Schüttgewicht dem 0,5- bis 2-fachen des spezifischen Schüttgewichtes der Kunststoffteile entsprechen.

15. Verfahren nach Anspruch 11,
**dadurch gekennzeichnet,**
daß die Scheuerpartikel in einer solchen Menge der umzuwälzenden Schüttung zugegeben werden, daß - bezogen auf das gesamte Schüttvolumen - der Anteil der Scheuerpartikel 1 bis 20 Vol.-% davon ausmacht.

16. Verfahren nach Anspruch 15,
**dadurch gekennzeichnet,**
daß der Anteil der Scheuerpartikel 5 bis 10 Vol.-% der umzuwälzenden Schüttung ausmacht.

17. Verfahren nach Anspruch 1 oder 11,
**dadurch gekennzeichnet,**
daß das Umwälzen chargen- oder batchweise in einem diskontinuierlich arbeitenden Mischer erfolgt.

18. Verfahren nach Anspruch 17,
**dadurch gekennzeichnet,**
daß die Chargen oder Batches jeweils 5 bis 30 Minuten lang behandelt werden.

19. Verfahren nach Anspruch 18,
**dadurch gekennzeichnet,**
daß die Behandlungsdauer der Chargen oder Batches jeweils 10 bis 20 Minuten beträgt.

20. Verfahren nach Anspruch 10,
**dadurch gekennzeichnet,**
daß je Charge oder Batch jeweils etwa 10 bis 1000 kg an Kunststoffteilen oder 25 bis 2500 l an Schüttvolumen behandelt werden.

## Claims

1. Process for the stripping of used parts or reject parts of plastic - called plastics parts for short hereinafter - with the aim of recycling the stripped plastic, in which the plastics parts are first mechanically comminuted to a pourable size, in which the plastics chips are circulated at elevated temperature together with an alkalified glycol, and in which after a certain treatment time the stripped plastics chips are separated from the stripping agent, flushed and then dried, characterized in that in order to strip coated plastics parts they are circulated together with an anhydrous, alkalified diethylene glycol or propylene glycol - together called "stripping agent" hereinafter - in a mass with mutual abrasion of the plastics parts at at least 50°C, the quantity of stripping agent added being from 1 to 10 % of the volume of the mass to be treated, so that the circulated parts are only wetted by the stripping agent.

2. Process according to Claim 1, characterized in that the circulation of the plastics parts is carried out at from 80 to 100°C.

3. Process according to Claim 1, characterized in that plastics parts of polycarbonate (PC) or of a polycarbonate blend, preferably with polybutylene terephthalate (PBT/PC), are stripped.

4. Process according to Claim 1, characterized in that the stripping agent is conveyed from a reservoir continuously through the treatment space of the mass and is circulated in a circuit.

5. Process according to Claim 4, characterized in that the circulated reservoir of stripping agent present in the circuit corresponds in volume terms to from 0.3 to 5 times the mass which is located in the treatment space.

6. Process according to Claim 5, characterized in that in volume terms from 0.7 of 2 times the mass of stripping agent which is located in the treatment space is circulated.

7. Process according to Claim 4, characterized in that the process heat of the circulated mass, which is necessary for the stripping operation, is supplied at least in part indirectly by way of the circulated stripping agent, this stripping agent being heated outside the treatment space in the circulation system.

8. Process according to Claim 1, characterized in that the plastics parts are first mechanically comminuted to a size such that the largest edge length or overall length of the parts measures less than 20 cm for about 90 % by weight of the parts and measures greater than 1 mm for at least 99 % by weight of the parts.

9. Process according to Claim 1, characterized in that the plastics parts are first mechanically comminuted to a size such that about 90 % by weight of the parts weigh less than 50 g each and at least 99.5 % of the parts weigh more than 5 mg each.

10. Process according to Claim 1, characterized in that the plastics parts are circulated in a closable free-fall mixer or positive mixer or in a rotary tube mixer.

11. Process according to Claim 1, characterized in that the plastics parts are circulated in the presence of abrasive particles which are produced from a material which is resistant to alkali and glycol.

12. Process according to Claim 11, characterized in that the plastics parts are circulated in the presence of abrasive particles which are produced from stainless steel plate.

13. Process according to Claim 11, characterized in that the co-circulated abrasive particles have a specific apparent density which corresponds to from 0.2 to 5 times the specific apparent density of the plastics parts.

14. Process according to Claim 13, characterized in that the specific apparent density of the abrasive particles corresponds to from 0.5 to 2 times the specific apparent density of the plastics parts.

15. Process according to Claim 11, characterized in that the abrasive particles are added to the mass to be circulated in a quantity such that - based on the overall volume of the mass - the proportion of abrasive particles is from 1 to 20 % by volume thereof.

16. Process according to Claim 15, characterized in that the proportion of abrasive particles is from 5 to 10 % by volume of the mass to be circulated.

17. Process according to Claim 1 or 11, characterized in that the circulation is carried out batchwise in a discontinuously operating mixer.

18. Process according to Claim 17, characterized in that the batches are each treated for from 5 to 30 minutes.

19. Process according to Claim 18, characterized in that the treatment duration of the batches is in each case from 10 to 20 minutes.

20. Process according to Claim 10, characterized in that from about 10 to 1000 kg of plastics parts or a volume of from 25 to 2500 l of the mass are treated per batch.

## Revendications

1. Procédé pour décaper des vieilles pièces ou des pièces mises au rebut en matière plastique - désignées ci-après de façon abrégée sous l'expression "pièces en matière plastique" - pour le recyclage de la matière plastique décapée, selon lequel on fragmente tout d'abord mécaniquement les pièces en matière plastique en des morceaux ayant une taille les rendant aptes à s'écouler, on fait circuler les rognures de matière plastique conjointement avec un glycol alcalinisé, à une température accrue et, après une certaine durée de traitement, on sépare les rognures de matière plastique décapées, des moyens de décapage, on les lave et ensuite on les sèche,
caractérisé en ce
que pour l'élimination de la peinture de pièces en matière plastique peintes, on fait circuler ces dernières conjointement avec un diéthylèneglycol ou un propylèneglycol alcalinisé exempt d'eau - désigné ci-après d'une manière abrégée par "agent d'élimination de la peinture" - dans un matériau en vrac avec un frottement réciproque des pièces de matière plastique, à au moins 50°C, la quantité de l'agent ajouté d'élimination de la peinture correspondant à 1 à 10 % en volume du volume du matériau en vrac à traiter, de sorte que les pièces entraînées en circulation sont simplement mouillées par l'agent d'élimination de la peinture.

2. Procédé selon la revendication 1, caractérisé en ce que la circulation des pièces en matière plastique s'effectue entre 80 et 100°C.

3. Procédé selon la revendication 1, caractérisé en ce que on élimine la peinture de pièces en matière plastique formée de polycarbonate (PC) ou d'un mélange de polycarbonates, de préférence en utilisant du téréphtalate de polybutylène (PBT/PC).

4. Procédé selon la revendication 1, caractérisé en ce que l'agent d'élimination de la peinture est entraîné continûment à partir d'une réserve à travers la chambre de traitement du matériau en vrac et circule selon un circuit.

5. Procédé selon la revendication 4, caractérisé en ce que la réserve en agent d'élimination de la peinture, qui est présente dans le circuit et circule, correspond, en volume, à 0,3 à 5 fois le volume du matériau en vrac situé dans la chambre de traitement.

6. Procédé selon la revendication 5, caractérisé en ce qu'un volume compris entre 0,7 et 2 fois le volume du matériau en vrac situé dans la chambre de traitement circule avec l'agent d'élimination de la peinture.

7. Procédé selon la revendication 4, caractérisé en ce que la chaleur de traitement, qui est nécessaire pour l'élimination de la peinture, du matériau en vrac entraîné en circulation est amenée au moins en partie indirectement par l'intermédiaire de l'agent d'élimination de la peinture, qui est entraîné en circulation, ce dernier étant chauffé à l'extérieur de la chambre de traitement dans le système de circulation.

8. Procédé selon la revendication 1, caractérisé en ce qu'on fragmente mécaniquement les pièces en matière plastique tout d'abord en les amenant à une taille telle que la longueur d'arête ou la longueur hors-tout maximale des morceaux est inférieure à 20 cm pour environ 90 % en poids des morceaux, et est supérieure à 1 mm, pour environ 99 % en poids des pièces.

9. Procédé selon la revendication 1, caractérisé en ce que les pièces en matière plastique sont fragmentées mécaniquement, en étant amenées tout d'abord à une taille telle que pour environ 90 % en poids des pièces, ces dernières pèsent moins de 50 g et que pour au moins 95,5 % des pièces, ces dernières pèsent plus de 5 mg.

10. Procédé selon la revendication 1, caractérisé en ce que les pièces en matière plastique sont entraînées en circulation dans un malaxeur à chute libre ou un malaxeur à mélange forcé, qui peut être fermé, ou dans un mélangeur à tube rotatif.

11. Procédé selon la revendication 1, caractérisé en ce que les pièces en matière plastique sont entraînées en circulation, en présence de particules abrasives fabriquées en un matériau qui résiste à la lessive et au glycol.

12. Procédé selon la revendication 11, caractérisé en ce que les pièces en matière plastique sont entraînées en circulation en présence de particules abrasives réalisées à partir d'une tôle d'acier inoxydable.

13. Procédé selon la revendication 11, caractérisé en ce que les particules abrasives entraînées conjointement en circulation possèdent un poids spécifique apparent, qui est compris entre 0,2 et 5 fois le poids spécifique apparent des pièces en matière plastique.

14. Procédé selon la revendication 13, caractérisé en ce que les particules abrasives ont un poids spécifique apparent qui est compris entre 0,5 et 2 fois le poids spécifique apparent des pièces en matière plastique.

15. Procédé selon la revendication 11, caractérisé en ce que les particules abrasives sont ajoutées au matériau en vrac entraîné en circulation, en une quantité telle que le pourcentage des particules abrasives est compris entre 1 et 20 % en volume - rapportés à l'ensemble du volume du matériau en vrac.

16. Procédé selon la revendication 15, caractérisé en ce que le pourcentage des particules abrasives est compris entre 5 et 10 % en volume du matériau en vrac entraîné en circulation.

17. Procédé selon la revendication 1 ou 11, caractérisé en ce que l'entraînement en circulation s'effectue de façon discontinue ou par lots, dans un malaxeur fonctionnant de façon discontinue.

18. Procédé selon la revendication 17, caractérisé en ce que les charges ou les lots sont traités respectivement pendant une durée de 5 à 30 minutes.

19. Procédé selon la revendication 18, caractérisé en ce que la durée de traitement des charges ou des lots est comprise respectivement entre 10 et 20 minutes.

20. Procédé selon la revendication 10, caractérisé en ce qu'en fonction de la charge ou du lot, on traite respectivement environ 10 à 1000 kg de pièces en matière plastique ou entre 25 et 2500 l de volume en vrac.
